# EUROPÄISCHE PATENTANMELDUNG

(11) **EP 3 531 276 A1**
(43) Veröffentlichungstag der Anmeldung: **28.08.2019**
(21) Anmeldenummer: 18213899.0
(22) Anmeldetag: 19.12.2018
(51) Int. Cl.: G06F 8/65, H04L 12/28

(54) **KOMMUNIKATIONSMODUL SOWIE VERFAHREN ZUM EINRICHTEN EINES SOLCHEN KOMMUNIKATIONSMODULS**

(30) Priorität: 26.02.2018 DE 102018104227
(71) Anmelder: Insta GmbH, 58509 Lüdenscheid (DE)
(72) Erfinder: Arndt, Ralf, 45359 Essen (DE); Großen, Thomas, 58239 Schwerte (DE); Rosemann, Peter, 58091 Hagen (DE); Stecura, Darius, 45731 Waltrop (DE); Reth, Karsten, 58300 Wetter (DE)

(57) **Zusammenfassung**

Ein Kommunikationsmodul 1 für einen Netzwerkteilnehmer T eines Datennetzwerkes umfasst eine Kommunikationsschnittstelle 2 und eine Prozessoreinheit 3 mit einem Prozessor 4, mit einem als flüchtigen Speicher ausgelegten Arbeitsspeicher 5 und mit einem nicht flüchtigen internen Speicher 6. An die Prozessoreinheit 3 ist ein externer, nicht flüchtiger Speicherbaustein angeschlossen, auf den die Prozessoreinheit 3 Zugriff hat. Der externe Speicherbaustein 7 umfasst ein erstes Speichersegment 9, in dem die Betriebssoftware im Auslieferungszustand des Kommunikationsmoduls 1 gespeichert ist, mit welcher Betriebssoftware die Kommunikationsschnittstelle 2 gemäß einem ersten System betrieben werden kann, und ein zweites Speichersegment 10, in dem eine zweite vorinstallierte Betriebssoftware gespeichert ist. In dem nicht flüchtigen internen Speicher 6 der Prozessoreinheit 3 ist die aktuell benutzte Betriebssoftware ggf. aktualisiert und/oder nutzerspezifisch angepasst gespeichert.

Beschrieben ist des Weiteren ein Verfahren zum Einrichten eines solchen Kommunikationsmoduls.

## Beschreibung

Die Erfindung betrifft ein Kommunikationsmodul für einen Netzwerkteilnehmer eines Datennetzwerkes, welches Kommunikationsmodul eine Kommunikationsschnittstelle und eine Prozessoreinheit mit einem Prozessor, mit einem als flüchtigen Speicher ausgelegten Arbeitsspeicher und mit einem nicht flüchtigen internen Speicher umfasst. Die Erfindung betrifft ferner ein Verfahren zum Einrichten des Kommunikationsmoduls eines Netzwerkteilnehmers eines Gebäudeinstallationsnetzwerkes.

Netzwerkteilnehmer eines Gebäudeinstallationsnetzwerkes sind insbesondere Sensoren oder Aktoren. Damit diese über das Datennetzwerk miteinander kommunizieren können, verfügt jeder Netzwerkteilnehmer über ein Kommunikationsmodul. Ein solches Kommunikationsmodul umfasst neben der physischen Schnittstelle zu dem typischerweise als Bus-System ausgelegten Datennetzwerk eine Prozessoreinheit und ist an die Stromversorgung des Netzteilnehmers angeschlossen. Die Prozessoreinheit verfügt über einen Prozessor und einen Arbeitsspeicher, der als flüchtiger Speicher ausgelegt ist. Das Kommunikationsmodul erhält den für seinen Betrieb notwendigen Strom über diejenige Stromversorgung, die für den Betrieb des Aktors oder Sensors zur Verfügung steht, somit beispielsweise über das Stromnetz. Eine Stromversorgung kann auch über das Bus-System erfolgen. Netzwerkteilnehmer können auch batteriebetrieben sein, dann wird das Kommunikationsmodul mit dem in einer solchen Batterie gespeicherten Strom betrieben.

Nicht unproblematisch ist bei einem solchen Datennetzwerk, wenn eine Aktualisierung der verwendeten Betriebssoftware den Kommunikationsmodulen der Netzwerkteilnehmer zugeführt werden soll. Derartige Aktualisierungen sind in vielen Fällen erforderlich, entweder um einem Benutzer einen größeren Funktionsumfang zur Verfügung zu stellen, um Fehler in der Betriebssoftware zu beheben oder um höheren sicherheitstechnischen Anforderungen zu genügen. Als problematisch wird die für das Einspielen der in den nicht flüchtigen Speicher des Kommunikationsmoduls benötigten Zeit angesehen. Längere Übertragungszeiten für den Empfang einer Betriebssoftware liegen in der mitunter relativ geringen Übertragungsrate in dem Datennetzwerk und auch in der Auslegung des Prozessors des Kommunikationsmoduls begründet. Da sich ein solches Kommunikationsmodul in jedem Netzwerkteilnehmer eines solchen Datennetzwerkes befindet, ist man aus Kostengründen bestrebt, diesen nur mit den für einen Betrieb des Kommunikationsmoduls erforderlichen Ressourcen auszurüsten, was v.a. die Leistungsfähigkeit des Prozessors betrifft. Daher sind in derartigen Kommunikationsmodulen in der Prozessoreinheit solche Prozessoren eingebaut, mit denen ein Betrieb des Kommunikationsmoduls mit der gewünschten Performance erfolgt. Je nach Umfang der empfangenen Betriebssoftware sind Ladezeiten von 10 Minuten und mehr nicht ungewöhnlich. Da dieser Ladeprozess die laufende Applikation beeinträchtigt, wird versucht, den Ladeprozess zu einer Zeit durchzuführen, in dem bei dem Kommunikationsmodul des Netzwerkteilnehmers bzw. bei den Kommunikationsmodulen aller Netzwerkteilnehmer keine laufende Applikation zu erwarten ist. Dieses ist naturgemäß bei den Netzwerkteilnehmern eines Gebäudeinstallationssystems nicht ganz einfach, da auf Grund der unterschiedlichen Gewerke und der Regelung der darin beteiligten Aktoren kaum ein Zeitfenster definiert werden kann, in dem in keinem Kommunikationsmodul eine Applikation läuft. Aus diesem Grunde wird vor dem Ladevorgang jedes Kommunikationsmodul in einen Konfigurationsmodus geschaltet, in welchem Modus in einer laufenden Applikation nur Grundfunktionalitäten zur Verfügung stehen. Somit können die Netzwerkteilnehmer zumindest in diesem Funktionalitätsumfang während der Dauer des Ladens einer Betriebssoftware weiter funktionieren. Abhilfe ließe sich hier nur durch den Einsatz deutlich leistungsfähiger Prozessoren schaffen. Dieses würde nicht nur die Kosten für ein solches Kommunikationsmodul signifikant erhöhen. Zudem wäre auch der Stromverbrauch erhöht, was bei solchen Netzwerkteilnehmern eine Rolle spielt, die beispielsweise batteriebetrieben sind.

Mitunter sollen Kommunikationsmodule für Netzwerkteilnehmer auch mit zwei unterschiedlichen Betriebssoftwaren vorinstalliert ausgeliefert werden. Nutzerseitig wird dann entschieden, mit welcher Betriebssoftware das Kommunikationsmodul des Netzwerkteilnehmers arbeiten soll. Die vorstehend angesprochene Problematik des Einbringens eines Updates gilt auch für solche Kommunikationsmodule.

Ausgehend von diesem diskutierten Stand der Technik liegt der Erfindung daher die Aufgabe zu Grunde, ein Kommunikationsmodul sowie ein Verfahren zum Einrichten eines solchen Kommunikationsmoduls vorzuschlagen, bei dem ohne Beeinträchtigung oder zumindest ohne nennenswerte Beeinträchtigung einer laufenden Applikation in einem Kommunikationsmodul eine solche Betriebssoftware, etwa als Aktualisierung geladen werden kann, ohne hierfür die Kommunikationsmodule mit einem leistungsfähigeren Controller ausrüsten zu müssen.

Gelöst wird die auf das Kommunikationsmodul gerichtete Aufgabe durch ein eingangs genanntes, gattungsgemäßes Kommunikationsmodul, bei dem an die Prozessoreinheit ein externer, nicht flüchtiger Speicherbaustein angeschlossen ist, auf den die Prozessoreinheit Zugriff hat, welcher externe Speicherbaustein ein erstes Speichersegment, in dem die Betriebssoftware im Auslieferungszustand des Kommunikationsmoduls gespeichert ist, mit welcher Betriebssoftware die Kommunikationsschnittstelle gemäß einem ersten System betrieben werden kann, und ein zweites Speichersegment umfasst, in dem eine zweite vorinstallierte Betriebssoftware zum alternativen Betreiben der Kommunikationsschnittstelle gespeichert ist, und bei dem in dem nicht flüchtigen Speicher der Prozessoreinheit die aktuell benutzte Betriebssoftware ggf. aktualisiert und/oder nutzerspezifisch angepasst gespeichert ist.

Die auf das Verfahren gerichtete Aufgabe wird erfindungsgemäß durch ein eingangs genanntes, gattungsgemäßes Verfahren gelöst, bei dem - die aktuell verwendete Betriebssoftware in einem der Prozessoreinheit des Kommunikationsmoduls zugehörigen, nicht flüchtigen Speicher gespeichert wird und das Kommunikationsmodul mit dieser Betriebssoftware arbeitet,
- eine über die Kommunikationsschnittstelle empfangende Betriebssoftware als Aktualisierung der aktuell verwendeten oder als neue Betriebssoftware in einem ersten Schritt in einem Speichersegment des externen Speicherbausteins gespeichert wird und
- anschließend von dem externen Speicherbaustein in den nicht flüchtigen internen Speicher der Prozessoreinheit kopiert oder umgespeichert wird.

Bei diesem Kommunikationsmodul und bei diesem Verfahren wird ein der Prozessoreinheit zugeordneter, nicht flüchtiger externer Speicherbaustein genutzt. Die Kosten eines solchen Speicherbausteines sind verglichen mit den Kosten des Einsatzes eines leistungsfähigeren Controllers gering. Ausgenutzt wird bei dem Gegenstand der Erfindung der Umstand, dass ein Datenaustausch zwischen der Prozessoreinheit und dem externen Speicherbaustein um ein Vielfaches schneller ist als der Ladevorgang. Wenn der Ladevorgang einer Betriebssoftware beispielhaft mit 10 Minuten anzusetzen ist, kann von dem externen Speicherbaustein diese Betriebssoftware in einem Bruchteil dieser Zeit in den nicht flüchtigen Speicher der Prozessoreinheit kopiert werden. Damit kann eine neue Betriebssoftware, beispielsweise als Aktualisierung durchaus im laufenden Applikationsbetrieb in den nicht flüchtigen internen Speicher des externen Speicherbausteins geschrieben werden, ohne dass dieses nutzerseitig sich durch eine nennenswerte Beeinträchtigung in der Applikation bemerkbar macht. Die Prozessoreinheit ist bezüglich ihres nicht flüchtigen internen Speichers bei dem Ladeprozess unbeeinflusst. Vorteilhaft ist bei diesem Konzept zudem, dass der Zeitpunkt des Speicherns der Betriebssoftware in den nicht flüchtigen Speicher der Prozessoreinheit für jedes Kommunikationsmodul in dem Datennetzwerk unabhängig von dem tatsächlichen Ladevorgang vorgegeben werden kann. Dieses ist vorteilhaft, da dann die neue Betriebssoftware, beispielsweise eine Aktualisierung zu der aktuell benutzten Betriebssoftware zu einem Zeitpunkt vorgenommen werden kann, zu dem in dem jeweiligen Kommunikationsmodul keine Applikation läuft. Der Prozess des Kopierens oder Umspeicherns von dem externen Speicherbaustein in den nicht flüchtigen Speicher der Prozessoreinheit dauert nur einen Bruchteil derjenigen Zeit, die für den Vorgang des Herunterladens in den nicht flüchtigen Speicher der Prozessoreinheit dauern würde. Je nach Umfang dieses Kopier- bzw. Umspeicherprozesses kann dieser nur wenige Sekunden oder einige Zehnersekunden dauern. Somit kann dieser Prozess letztendlich auch ohne nennenswerte Beeinträchtigung einer aktuell laufenden Applikation, auch wenn diese für diese Zeitdauer nur mit ihrer Grundfunktionalität ausgeführt werden kann, zu jeder beliebigen Zeit vorgenommen werden.

Die Ausrüstung des Kommunikationsmoduls mit einem externen, nicht flüchtigen Speicherbaustein erlaubt es auch, dass das Kommunikationsmodul mit einer zweiten Betriebssoftware ausgerüstet ist bzw. ausgerüstet werden kann. Diese befindet sich in einem Speichersegment des externen Speicherbausteins. Dieses ermöglicht es einem Nutzer, auf Wunsch auf diese Betriebssoftware umzustellen. Ist dieses gewünscht, wird diese Betriebssoftware aus dem Speicherbaustein in den nicht flüchtigen internen Speicher der Prozessoreinheit kopiert.

An Stelle oder auch ergänzend zu dem Vorsehen eines Speichersegmentes für eine solche zweite Betriebssoftware kann der Speicherbaustein ein Speichersegment umfassen, in dem die Betriebssoftware im Auslieferungszustand des Kommunikationsmoduls oder auch in einer älteren Version der Betriebssoftware gespeichert ist. Auf diese Betriebssoftware wird bei einem Reset des Kommunikationsmoduls zurückgegriffen, bei welchem Reset diese Betriebssoftware in den nicht flüchtigen Speicher der Prozessoreinheit kopiert wird. Zwar gehen bei einem solchen Reset die ggf. in dem nicht flüchtigen Speicher der Prozessoreinheit bereits integrierten Aktualisierungen und/oder nutzerspezifischen Anpassungen verloren. Die Betriebssoftwareaktualisierungen können jedoch ohne weiteres nachgeladen werden.

Bei einer Auslegung des externen Speicherbausteins mit zwei Speichersegmenten, wobei in einem ersten Speichersegment die Betriebssoftware im Auslieferungszustand und in einem zweiten Speichersegment eine zweite Betriebssoftware gespeichert ist, ist, um das Speichervolumen des externen Speicherbausteins nicht unnötig groß auslegen zu müssen, vorgesehen, dass eine über die Kommunikationsschnittstelle empfangene Betriebssoftware in das zweite Speichersegment geschrieben wird, in dem die zweite Betriebssoftware gespeichert ist. Dieses erfolgt durch Überschreiben der zuvor darin gespeicherten Betriebssoftware.

Erfolgt ein Wechsel der Betriebssoftware von dem einen Betriebssystem auf ein zweites Betriebssystem und ist die zweite Betriebssoftware aus dem externen Speicherbaustein in den nicht flüchtigen internen Speicher der Prozessoreinheit kopiert worden, wird diese ebenfalls in das erste Speichersegment kopiert, in dem zuvor die Betriebssoftware im Auslieferungszustand des Kommunikationsmoduls gespeichert war. Auch diese wird durch diesen Vorgang überschrieben. Auf diese Weise bleibt auch bei einem Betriebssoftwarewechsel die diesbezügliche Auslieferungsbetriebssoftware in dem hierfür vorgesehenen ersten Speichersegment des externen Speicherbausteins für mögliche spätere Anwendungen, beispielsweise für einen Reset erhalten. Zu dieser Betriebssoftware empfangene neue Betriebssoftware wird, dem vorbeschriebenen Konzept folgend, in dem zweiten Speichersegment des externen Speicherbausteins zunächst gespeichert, bevor es in den nicht flüchtigen Speicher der Prozessoreinheit geschrieben wird.

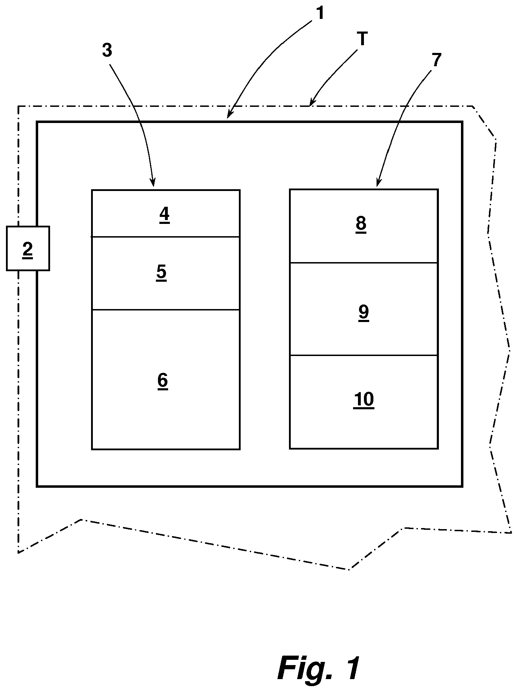

Nachfolgend ist die Erfindung anhand eines Ausführungsbeispiels unter Bezugnahme auf **Figur 1** beschrieben.

Figur 1 zeigt ein schematisiertes Blockschaltbild eines Kommunikationsmoduls 1 eines im Übrigen nicht näher dargestellten Netzwerkteilnehmers T eines Gebäudeinstallationsnetzwerkes. Das Kommunikationsmodul 1 kann zum Beispiel dasjenige eines Sensors oder eines Aktors sein. Das Kommunikationsmodul 1 kann auch Teil eines anderen Netzwerkteilnehmers sein, wie beispielsweise eines Routers oder Medienkopplers. Das Kommunikationsmodul 1 ist mittels einer physischen Kommunikationsschnittstelle 2 an ein Datennetzwerk, bei dem es sich im vorliegenden Fall um ein Gebäudeinstallationsdatennetzwerk handelt, anschließbar. Die Kommunikationsschnittstelle 2 des dargestellten Ausführungsbeispiels ist als KNX-Schnittstelle ausgeführt.

Das Kommunikationsmodul 1 umfasst eine Prozessoreinheit 3 mit einem Prozessor 4, dem ein RAM-Speicher als Arbeitsspeicher 5 zugeordnet ist. Teil der Prozessoreinheit 3 ist bei dem dargestellten Ausführungsbeispiel ebenfalls ein nicht flüchtiger interner Speicher 6. In diesem ist die Betriebssoftware zum Betreiben des Kommunikationsmoduls 1 gespeichert. Das Kommunikationsmodul 1 verfügt des Weiteren über einen auf derselben Leiterplatte wie die Prozessoreinheit 3 angeordneten nicht flüchtigen externen Speicherbaustein 7, der bei dem dargestellten Ausführungsbeispiel als Flash-EEPROM ausgeführt ist. Der Speicherbaustein 7 umfasst bei dem dargestellten Ausführungsbeispiel drei Speichersegmente 8, 9 und 10. In nicht dargestellter Art und Weise ist die Prozessoreinheit 3 zum Austausch von Daten an den Speicherbaustein 7 angeschlossen.

Der externe Speicherbaustein 7 umfasst ein Anwendungsdatenspeichersegment 8, in dem Anwendungsdaten der Prozessoreinheit 3 abgelegt sind. In einem ersten Speichersegment 9 des externen Speicherbausteins 7 ist die Betriebssoftware zum Betreiben des Kommunikationsmoduls 1 in dem Auslieferungszustand es Kommunikationsmoduls 1 gespeichert. Diese Betriebssoftware ist ebenfalls in dem nicht flüchtigen internen Speicher 6 der Prozessoreinheit 3 abgelegt. Im Auslieferungszustand des Kommunikationsmoduls 1 befindet sich in noch einem zweiten Speichersegment 10 eine zweite, sich von der vorgenannten Betriebssoftware unterscheidende Betriebssoftware. In einer anderen Ausführung ist in dem zweiten Speichersegment 10 ein zweiter Auslieferungszustand der in dem nicht flüchtigen internen Speicher 6 der Prozessoreinheit 3 abgelegten Betriebssoftware gespeichert. Auf diese kann ein Nutzer bei Bedarf zurückgreifen und das Kommunikationsmodul 1 auf diese andere Betriebssoftware umstellen. In einem solchen Fall wird diese in den nicht flüchtigen Speicher 6 der Prozessoreinheit 3 kopiert. Bei dem in der Figur beschriebenen Ausführungsbeispiel wird zu diesem Zweck die in dem zweiten Speichersegment 10 gespeicherte Betriebssoftware zunächst in das erste Speichersegment 9 des externen Speicherbausteins 7 kopiert, wodurch die darin gespeicherte Auslieferungsbetriebssoftware überschrieben wird. Anschließend wird diese weitere Betriebssoftware aus dem ersten Speichersegment 9 in den nicht flüchtigen internen Speicher 6 der Prozessoreinheit 3 kopiert. Das zweite Speichersegment 10 steht danach für die Speicherung von zukünftigen Updates der dann zum Betreiben der Kommunikationsschnittstelle 2 eingesetzten Betriebssoftware zur Verfügung.

Wird in der Kommunikationsschnittstelle 2 eine neue Betriebssoftware empfangen, was beispielsweise eine Aktualisierung sein kann, wird diese durchaus bei laufender Anwendung des Kommunikationsmoduls 1 zunächst in das zweite Speichersegment 10 des externen Speicherbausteins 7 gespeichert. Dabei wird die darin befindliche alternative Betriebssoftware überschrieben. Wesentlich ist, dass bei diesem Prozess eine laufende Anwendung des Kommunikationsmoduls 1 nicht unterbrochen werden muss und diese auch durch den Lade- und Speichervorgang in dem zweiten Speichersegment 10 des externen Speicherbausteins 7 nicht beeinträchtigt ist.

In einer weiteren Ausgestaltung des Kommunikationsmoduls ist in dem nicht flüchtigen internen Speicher 6 der Prozessoreinheit 3 die im Auslieferungszustand des Kommunikationsmoduls 1 aktuelle Betriebssoftware vorinstalliert. Diese unterscheidet sich unter Umständen von der ursprünglichen Programmversion der Betriebssoftware durch zwischenzeitliche Aktualisierungen. In dem ersten Speichersegment 9 des externen Speicherbausteins 7 ist hingegen die ursprüngliche Betriebssoftware ohne Aktualisierungen gespeichert. Dieses Kommunikationsmodul 1 verfügt somit über drei Betriebssoftwares. Vorteilhaft bei einer solchen Ausgestaltung ist, dass, wenn das Kommunikationsmodul 1 in einem Datennetzwerk eingebunden werden soll, welches einen älteren Stand der Betriebssoftware hat, dass dann die in dem nicht flüchtigen internen Speicher 6 der Prozessoreinheit 3 vorinstallierte Betriebssoftware nicht um darin enthaltene Aktualisierungen zurückgebildet werden muss (downgegradet werden muss), sondern dass die ursprüngliche Version der Betriebssoftware aus dem ersten Speichersegment 9 in den nicht flüchtigen internen Speicher 6 der Prozessoreinheit 3 kopiert und darin installiert werden kann, um anschließend nur diejenigen Aktualisierungen, falls erforderlich, vorzunehmen, um das Betriebsmodul 1 auf den Aktualisierungsstand des Datennetzwerkes zu bringen.

Die Erfindung ist anhand von Ausführungsbeispielen beschrieben worden. Ohne den Umfang der geltenden Ansprüche zu verlassen, ergeben sich für einen Fachmann weitere Möglichkeiten die Erfindung umzusetzen, ohne dass dieses im Rahmen dieser Ausführungen im Einzelnen erläutert werden müsste.

### Bezugszeichenliste

- 1: Kommunikationsmodul
- 2: Kommunikationsschnittstelle
- 3: Prozessoreinheit
- 4: Prozessor
- 5: Arbeitsspeicher
- 6: nicht flüchtiger interner Speicher
- 7: Speicherbaustein
- 8: Anwendungsdatenspeichersegment
- 9: Erstes Speichersegment
- 10: Zweites Speichersegment

- T: Netzwerkteilnehmer

## Patentansprüche

1. Kommunikationsmodul für einen Netzwerkteilnehmer (T) eines Datennetzwerkes, welches Kommunikationsmodul (1) eine Kommunikationsschnittstelle (2) und eine Prozessoreinheit (3) mit einem Prozessor (4), mit einem als flüchtigen Speicher ausgelegten Arbeitsspeicher (5) und mit einem nicht flüchtigen internen Speicher (6) umfasst, **dadurch gekennzeichnet, dass** an die Prozessoreinheit (3) ein externer, nicht flüchtiger Speicherbaustein (7) angeschlossen ist, auf den die Prozessoreinheit (3) Zugriff hat, welcher externe Speicherbaustein (7) ein erstes Speichersegment (9), in dem die Betriebssoftware im Auslieferungszustand des Kommunikationsmoduls (1) gespeichert ist, mit welcher Betriebssoftware die Kommunikationsschnittstelle (2) gemäß einem ersten System betrieben werden kann, und ein zweites Speichersegment (10) umfasst, in dem eine zweite vorinstallierte Betriebssoftware zum alternativen Betreiben der Kommunikationsschnittstelle (2) gespeichert ist, und dass in dem nicht flüchtigen internen Speicher (6) der Prozessoreinheit (3) die aktuell benutzte Betriebssoftware ggf. aktualisiert und/oder nutzerspezifisch angepasst gespeichert ist.

2. Kommunikationsmodul nach Anspruch 1, **dadurch gekennzeichnet, dass** der externe Speicherbaustein (7) ein Flash-EEPROM ist.

3. Kommunikationsmodul nach Anspruch 1 oder 2, **dadurch gekennzeichnet, dass** der externe Speicherbaustein (7) auf derselben Platine wie die Prozessoreinheit (3) angeordnet ist.

4. Verfahren zum Einrichten des Kommunikationsmoduls eines Netzwerkteilnehmers eines Gebäudeinstallationsnetzwerkes, **dadurch gekennzeichnet, dass**
- die aktuell verwendete Betriebssoftware in einem der Prozessoreinheit (3) des Kommunikationsmoduls (1) zugehörigen, nicht flüchtigen internen Speicher (6) gespeichert wird und das Kommunikationsmodul (1) mit dieser Betriebssoftware arbeitet,
- eine über die Kommunikationsschnittstelle (2) empfangende Betriebssoftware als Aktualisierung der aktuell verwendeten oder als neue Betriebssoftware in einem ersten Schritt in einem Speichersegment (10) des externen Speicherbausteins (7) gespeichert wird und
- anschließend von dem externen Speicherbaustein (7) in den nicht flüchtigen internen Speicher (6) der Prozessoreinheit (3) kopiert oder umgespeichert wird.

5. Verfahren nach Anspruch 4, **dadurch gekennzeichnet, dass** der externe Speicherbaustein (7) ein erstes Speichersegment (9), in dem die Betriebssoftware im Auslieferungszustand des Kommunikationsmoduls (1) gespeichert ist, und ein zweites Speichersegment (10) umfasst, in dem eine zweite vorinstallierte Betriebssoftware gespeichert ist, und dass die empfangene Betriebssoftware in das zweite Speichersegment (10) des Speicherbausteins (7) durch Überschreiben der darin abgelegten zweiten Betriebssoftware geschrieben wird.
